# EUROPEAN PATENT APPLICATION

(11) **EP 2 930 670 A1**
(43) Date of publication of application: **14.10.2015**
(21) Application number: 14305541.6
(22) Date of filing: 11.04.2014
(51) Int. Cl.: G06Q 10/02, G06Q 50/14

(54) **System and method for generating an electronic miscellaneous document**

(71) Applicant: Amadeus S.A.S., 06410 Biot (FR)
(72) Inventor: Alberola, Bertrand, 06580 Pegomas (FR); Hurteloup, Philippe, 06130 Grasse (FR); Fontebride, Vanessa, 06650 Le Rouret (FR); Aurard, Thomas, 06600 Antibes (FR); Lamy, Michael, 06560 Valbonne (FR)
(74) Representative: Gevers Patents

(57) **Abstract**

A computer system (1) for generating an Electronic Miscellaneous Document (EMD) (18) containing information relating to at least one ancillary travel service booked for at least one Passenger Name Record (PNR) (2, 12, 22) for a client, wherein a request 17 for obtaining at least one ancillary travel service is coupled to a plurality of PNRs (2, 12, 22), wherein a booking component (6) is provided to add booking information to an aggregation record (10), wherein a pricing component (7) is provided for putting pricing information to the aggregation record (10), wherein a payment component (8) is provided for adding payment information to the aggregation record (10) and wherein an issuing component (9) is provided to issue the at least one paid ancillary travel service by adding issuing information to the aggregation record (10) and generating a single EMD (18).

## Description

The current invention relates to a system for generating an Electronic Miscellaneous Document (EMD) according to the preamble of the first claim.

Systems for generating Electronic Miscellaneous Documents (EMDs) are already very known to the travelling industry, especially the air travel industry. An Electronic Miscellaneous Document (EMD) is an electronic, often printable, document which is issued and transferred to a client after having booked an ancillary travel service for a Passenger Name Record for a client, receiving pricing information and paying the price for the travel service. Services for which EMDs are now issued are for example: allowance to carry additional luggage, allowance to enter certain zones, for example special zones such as business lounges, etc., the right for a meal and/or at least one drink during a trip, for example during a flight, allowance to choose a certain specific kind of seat, for example a window seat, an aisle seat, a seat with extra leg room, etc., limousine transfer services, in-flight services, such as magazines, DVDs, etc, upgrade to a better cabin, etc. Since the EMD is only transferred to the client after payment for the at least one service and/or product, the EMD is proof of a right to a certain travel and/or travel service.

Currently, EMDs are delivered based on a single Passenger Name Record (PNR). A PNR is a record comprising passenger information, often abbreviated as PAX, and segment information. The segment information contains information on the one or more travel segment that the passenger will travel.

The current computer system for generating an EMD comprises a controller. The controller is arranged for receiving a request for obtaining an ancillary travel service coupled to a PNR. A computer storage logic operatively coupled to the controller and is provided to retrieve the PNR from the computer storage logic. The controller comprises a booking component for booking the ancillary travel service to the PNR by adding booking information to the PNR, a pricing component for pricing the booked ancillary travel service information and adding pricing information to the PNR, a payment component for paying the priced ancillary travel service and adding payment information to the PNR and an issuing component for issuing the paid ancillary travel service by adding issuing information to the PNR and generating an Electronic Miscellaneous Document (EMD) containing the issued ancillary travel service for the client.

However, such a system only allows to work with individual Passenger Name Records (PNRs) while several trips are composed of several segments which may be divided over several PNRs, for example when certain segments are booked through different travel agents and/or are booked with different transport companies, for example airline companies, in this case the marketing PNR will be duplicated in several operating PNRs (one per airline) and the DCS will need to handle directly the various operating PNRs. This means that when segments of a trip are divided over several PNR files, for ancillary travel services booked on the different PNRs, different EMDs are created. Such plurality of EMDs can however be quite cumbersome for a traveller, the travel agent and the transport company. Moreover, for the specific case of baggage, new IATA resolution 302 and its US DOT equivalent impose booking of the baggage on the entire journey and issuance of a single EMD.

Therefore it is an object of the present invention to provide a system for generating an EMD in which a single EMD can be created for a plurality of PNRs.

This is achieved according to the present invention by a system comprising the technical features of the characterizing portion of the first claim.

Thereto, the request is for obtaining at least one ancillary travel service coupled to the plurality of PNRs, the booking component is provided to add the booking information to an aggregation record, the pricing component is provided for putting pricing information to the aggregation record, the payment component is provided for adding payment information to the aggregation record and the issuing component is provided to issue the at least one paid ancillary travel service by adding issuing information to the aggregation record and generating a single EMD.

According to such computer systems it becomes possible to issue a single EMD for the aggregation record, which in its turn comprises all relevant information relating to the trip.

According to preferred embodiments of the system according to the present invention, the controller comprises an aggregation component for, upon receipt of the request for obtaining at least one ancillary travel service coupled to the plurality of PNRs, creating the aggregation record and aggregating the passenger information of a plurality of Passenger Name Records (PNRs) into the aggregation record. Such an aggregation component makes it possible to create the aggregation record for the multiple PNRs. When it is later desired to add an ancillary service to the PNRs, it is possible to use the previously created aggregation record. In addition it is possible that some segment information is present in one or more of the PNRs as a so-called informational segment. The aggregation component preferably also takes such informational segments into account and copies them to aggregation record, more preferably after having marked them as active segments.

According to preferred embodiments of the system according to the present invention, the booking component is provided to add the booking information to the aggregation record. According to more preferred embodiments the booking component is provided to add the booking information to the aggregation record by copying the booking information to the aggregation record after booking the respective ancillary travel services to the respective PNRs by adding the respective booking information to the respective PNRs. By adding the booking information first to the respective PNRs and then copying the booking information to the aggregation record, the existing booking booking software, i.e. the software used for booking ancillary travel services to the PNRs can be used. According to other more preferred embodiments, the booking component is provided to add the booking information to the aggregation record directly, especially when the booking information relates to informational segments. It has been found that such way of adding booking information allows for example to add booking information to informational segments after been marked as active. According to more preferred embodiments of the current invention, the booking component is provided to add the booking information to the aggregation record directly when the booking information relates to informational segments and by copying the booking information to the aggregation record after booking the respective ancillary travel services to the respective PNRs by adding the respective booking information to the respective PNRs in other cases.

According to preferred embodiments of the system according to the present invention, when adding respective issuing information to the respective PNRs, the payment component is provided to add the respective payment information to the respective PNRs. By keeping the PNRs up to date, it has been found that for example the known accounting components for adding accounting information to an interface record (IR), for example an AMADEUS Interface Record (AIR) after addition of the payment information to the PNRs can still be used, making implementation of the method according to the current invention less difficult. Moreover it has been found that since the PNRs are kept up to date, the different service providers accessing the PNRs, for example during travel of the client, are provided with up to date information with respect to the ancillary services bought by the client.

According to preferred embodiments of the system according to the present invention, the computer storage logic is provided to link the PNRs and the aggregation record to a single mapping record, which preferably is accorded an ID which for example will be used as a session ID, for example by the computer storage logic in accordance with for example instructions from the controller. As the different records interrelated with respect to the at least one ancillary service are then linked to the mapping record, all the associated information is accessible from a single entry point, making it more easy to access the information later on, for example when desired by one of the parties involved in the travel of the client, for example by inputting the session ID in a search tool.

According to preferred embodiments of the system according to the current invention, the controller is provided to accord to the aggregation record an aggregation record reference, for example a reference number. Such a reference makes it more easy to access the aggregation record later on, for example when desired by one of the parties involved in the travel of the client, for example by inputting the aggregation record reference in a search tool.

According to preferred embodiments of the system of the current invention, the aggregation component which is provided to aggregate the passenger information of the PNRs into the aggregation record, is provided to scan the passenger information and the segment information and to identify the at least one passenger in the different PNRs and to couple the at least one passenger to the corresponding plurality of segments found in the PNRs. Such an approach has been found to be able to merge passenger information of different identical passengers into corresponding aggregated passenger information in the aggregation record and to couple the thus obtained aggregated passenger information to the different segments found in the different PNRs. By merging the different passenger information into the aggregated passenger information, preferably, it is possible to incorporate different sets of similar data, such as for example different sets of contact data for the passenger, in the aggregation record.

The invention also relates to a method for generating an Electronic Miscellaneous Document (EMD). The EMD contains information relating to at least one ancillary travel service booked for at least one Passenger Name Record (PNR) for a client. The PNR comprises passenger information (PAX) and segment information. The method comprising the steps of:
- a controller of a computer system receiving a request for obtaining an ancillary travel service coupled to a PNR,
- the controller retrieving the PNR from a computer storage logic operatively coupled to the controller,
- a booking component of the controller booking the ancillary travel service to the PNR by adding booking information to the PNR,
- a pricing component of the controller pricing the booked ancillary travel service information and adding pricing information to the PNR,
- a payment component of the controller paying the priced ancillary travel service and adding payment information to the PNR and
- an issuing component of the controller issuing the paid ancillary travel service by adding issuing information to the PNR and generating an Electronic Miscellaneous Document (EMD) containing the issued ancillary travel service for the client.

The request for obtaining an ancillary travel service coupled to a PNR is for obtaining at least one ancillary travel service coupled to the plurality of PNRs. The booking component adds the booking information to an aggregation record. The pricing component puts pricing information to the aggregation record. The payment component adds payment information to the aggregation record. The issuing component issues the at least one paid ancillary travel service by adding issuing information to the aggregation record and generating a single EMD.

According to preferred embodiments of the method according to the present invention, the controller comprises an aggregation component, upon receipt of the request for obtaining at least one ancillary travel service coupled to the plurality of PNRs, creating the aggregation record and aggregating the passenger information of a plurality of Passenger Name Records (PNRs) into the aggregation record. Such an aggregation component makes it possible to create the aggregation record for the multiple PNRs. When it is later desired to add a ancillary service to the PNRs, it is possible to use the previously created aggregation record. In addition it is possible that some segment information is present in one or more of the PNRs as a so-called informational segment. The aggregation component preferably also takes such informational segments into account and copies them to aggregation record, more preferably after having marked them as active segments.

Preferably the method comprises the, preferably subsequent, steps of:
- the controller receiving the request for obtaining at least one ancillary travel service coupled to a plurality of PNRs,
- the controller retrieving the PNRs from the computer storage logic,
- the booking component adding the booking information to the aggregation record and, preferably after, preferably booking the respective ancillary travel service to the respective PNRs by adding the respective booking information to the respective PNRs,
- the pricing component pricing the booked ancillary travel service information and putting the pricing information to the aggregation record and, preferably then, adding respective pricing information to the respective PNRs,
- the payment component paying the priced ancillary travel service and adding the payment information to the aggregation record and, preferably thereafter, adding respective payment information to the respective PNRs and
- the issuing component issuing the paid ancillary travel service by adding the issuing information to the aggregation record and, preferably then, adding respective issuing information to the respective PNRs and generating the single Electronic Miscellaneous Document (EMD) containing the issued ancillary travel service for the client.

According to preferred embodiments of the method according to the present invention, the booking component adds the booking information to the aggregation record, preferably by copying the booking information to the aggregation record after booking the respective ancillary travel services to the respective PNRs by adding the respective booking information to the respective PNRs. By adding the booking information first to the respective PNRs and then copying the booking information to the aggregation record, the existing booking software, i.e. the software used for booking ancillary travel services to the PNRs can be used. According to other preferred embodiments, the booking component adds the booking information to the aggregation record directly, especially when the booking information relates to informational segments. It has been found that such way of adding booking information allows for example to add booking information to informational segments after been marked as active. According to more preferred embodiments of the current invention, the booking component is provided to add the booking information to the aggregation record directly when the booking information relates to informational segments and by copying the booking information to the aggregation record after booking the respective ancillary travel services to the respective PNRs by adding the respective booking information to the respective PNRs in other cases.

According to preferred embodiments of the method according to the present invention, when adding respective issuing information to the respective PNRs, the payment component adds the respective payment information to the respective PNRs. By keeping the PNRs up to date, it has been found that for example the known accounting components for adding accounting information to an interface record (IR), for example an AMADEUS Interface Record (AIR) after addition of the payment information to the PNRs can still be used, making implementation of the method according to the current invention less difficult. Moreover it has been found that since the PNRs are kept up to date, the different service providers accessing the PNRs, for example during travel of the client, are provided with up to date information with respect to the ancillary services bought by the client.

According to preferred embodiments of the method according to the present invention, the PNRs and the aggregation record are linked by the computer storage logic to a single mapping record, which preferably is accorded an ID, which for example will be used as a session ID, for example by the computer storage logic in accordance with for example instructions from the controller. As the different records interrelated with respect to the at least one ancillary service are then linked to the single mapping record, all the associated information is accessible from a single entry point, making it more easy to access the information later on, for example when desired by one of the parties involved in the travel of the client, for example by inputting the session ID in a search tool.

According to preferred embodiments of the method according to the current invention, the aggregation record is accorded an aggregation record reference, for example a reference number, for example by the controller. Such a reference makes it more easy to access the aggregation record later on, for example when desired by one of the parties involved in the travel of the client, for example by inputting the aggregation record reference in a search tool.

According to preferred embodiments of the method according to the present invention, the method is provided for generating an Electronic Miscellaneous Document (EMD) with the computer system according to the invention, the controller being part of the computer system.

According to preferred embodiments of the method of the current invention, the aggregation component aggregating the passenger information of the PNRs into the aggregation record, scans the passenger information and the segment information and identifies the at least one passenger in the different PNRs and couples the at least one passenger to the corresponding plurality of segments found in the PNRs. Such an approach has been found to be able to merge passenger information of different identical passengers into corresponding aggregated passenger information in the aggregation record and to couple the thus obtained aggregated passenger information to the different segments found in the different PNRs. By merging the different passenger information into the aggregated passenger information, preferably, it is possible to incorporate different sets of similar data, such as for example different sets of contact data for the passenger, in the aggregation record.

Other details and advantages of the computer implemented gateway according to the invention will become apparent from the enclosed figures and description of preferred embodiments of the invention.

Figure 1 - 6 show a schematic overview of the different steps of the method and the system according to the invention.

Figure 7 shows an overview of a specific step of the method and system according to the present invention.

The figures show an overview of the preferred different subsequent steps of a preferred embodiment of the method according to the present invention.

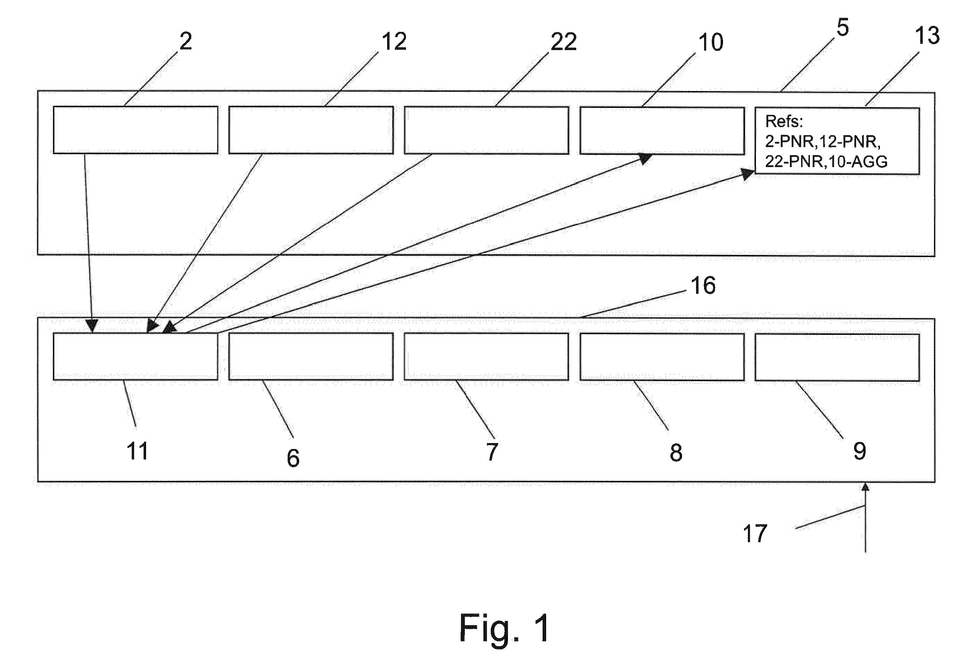

Figure 1 shows a controller 16 receiving a request 17 for obtaining an ancillary travel service coupled to a multiple of PNRs 2, 12, 22.

Although the figures only refer to three PNRs 2, 12, 22, this is not critical for the invention and more or less PNRs are possible such as for example two, four, five, six, etc.

The controller 16 retrieves in a next step the PNRs 2, 12, 22 from the computer storage logic 5.

The controller 16 and computer storage logic 5 preferably are part of at least one computer. It is possible that the controller 16 and the computer storage logic 5 are distributed over a number of computers, for example that the controller 16 is part of a first computer, or even a multiple of first computers, and that the computer storage logic 5 is part of a second computer, or even a multiple of second computers, interconnected to the first computer over a network such as for example an intranet or even the internet.

The controller 16 preferably comprises an aggregation component 11, upon receipt of the request 17 for obtaining at least one ancillary travel service coupled to the plurality of PNRs 2, 12, 22, creating the aggregation record 10 and aggregating the passenger information of a plurality of Passenger Name Records (PNRs) 2, 12, 22 into the aggregation record 10, when no such aggregation record 10 had been created. In case an aggregation record 10 already has been created previously, the aggregation record 10 is retrieved from the computer storage logic 5. Preferably, the aggregation record 10 is accorded an aggregation record reference.

As can be seen in figure 1, the aggregation record 10 preferably is grouped together with the PNRs 2, 12, 22 from which it is referenced in a single mapping record 13, stored in the same storage logic 5.. Preferably, the folder 13 is accorded a session ID. By way of example the different references to the PNRs and the aggregation record are schematically indicated in figure 1 by 2-PNR,12-PNR, 22-PNR and10-AGG.

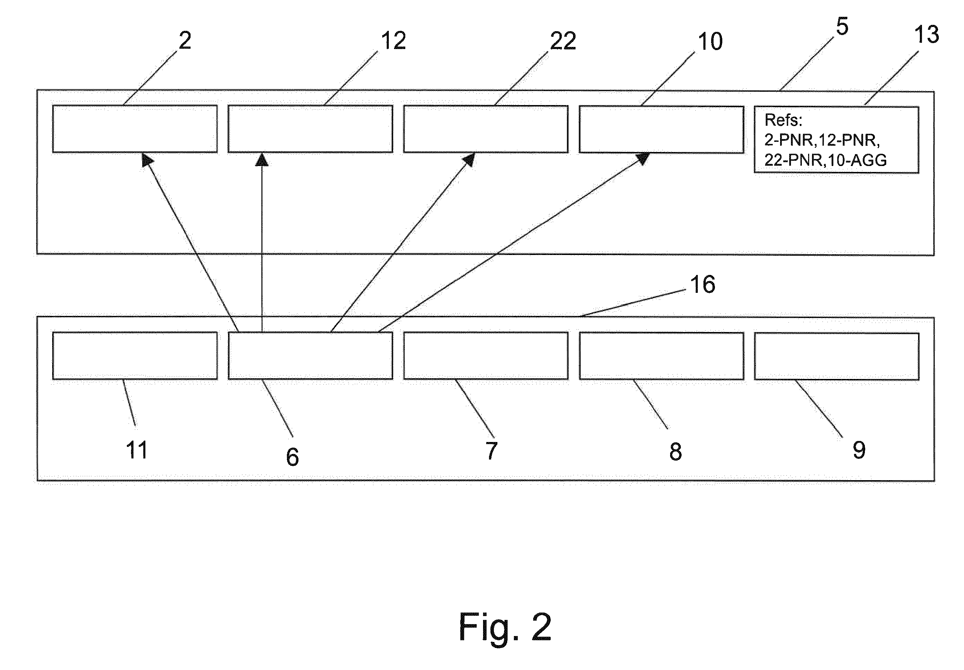

As can be seen in figure 2, preferably in a next step a booking component 6 adds the booking information to the aggregation record 10 preferably after booking the respective ancillary travel service to the respective PNRs 2, 12, 22 by adding the respective booking information to the respective PNRs 2, 12, 22, preferably by copying the booking information from the PNRs to the aggregation record 10.

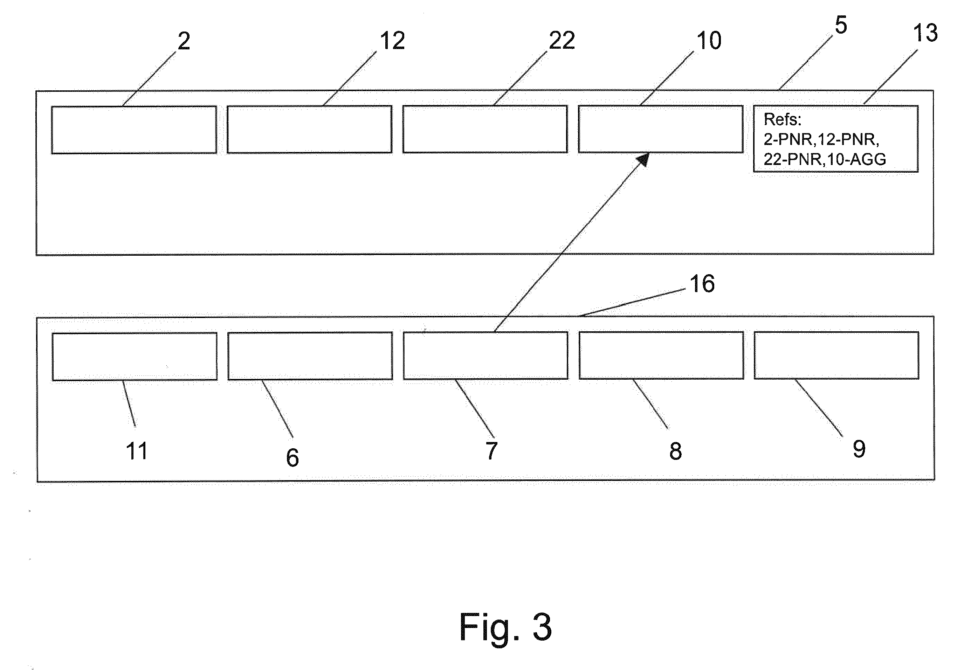

As can be seen in figure 3, a pricing component 7 prices the booked ancillary travel service information and puts the pricing information into the aggregation record 10.

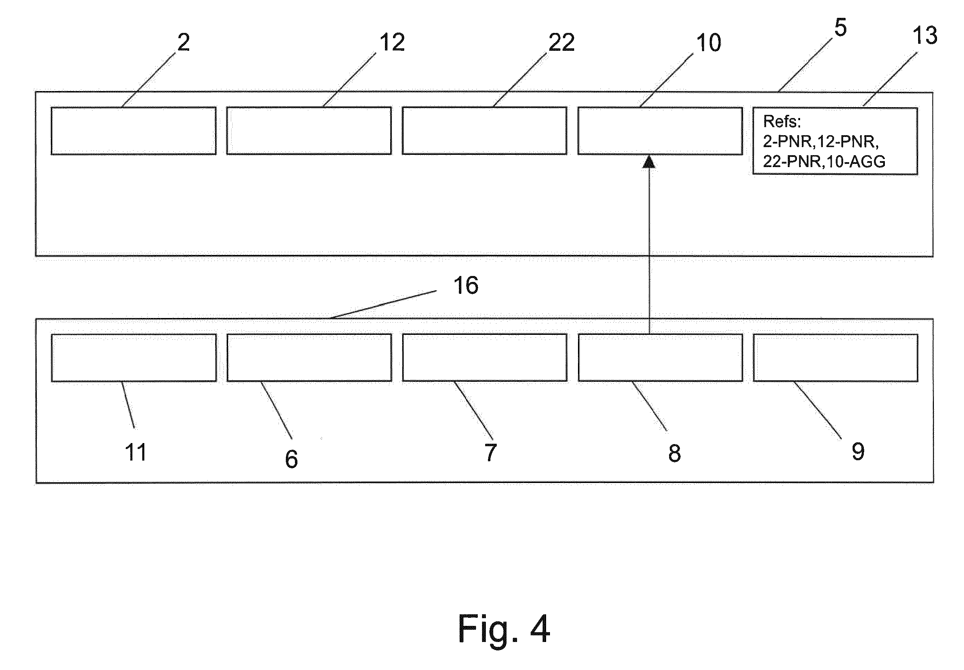

Further figure 4 shows that preferably in a next step, the payment component 8 pays the priced ancillary travel service and adds the payment information to the aggregation record 10.

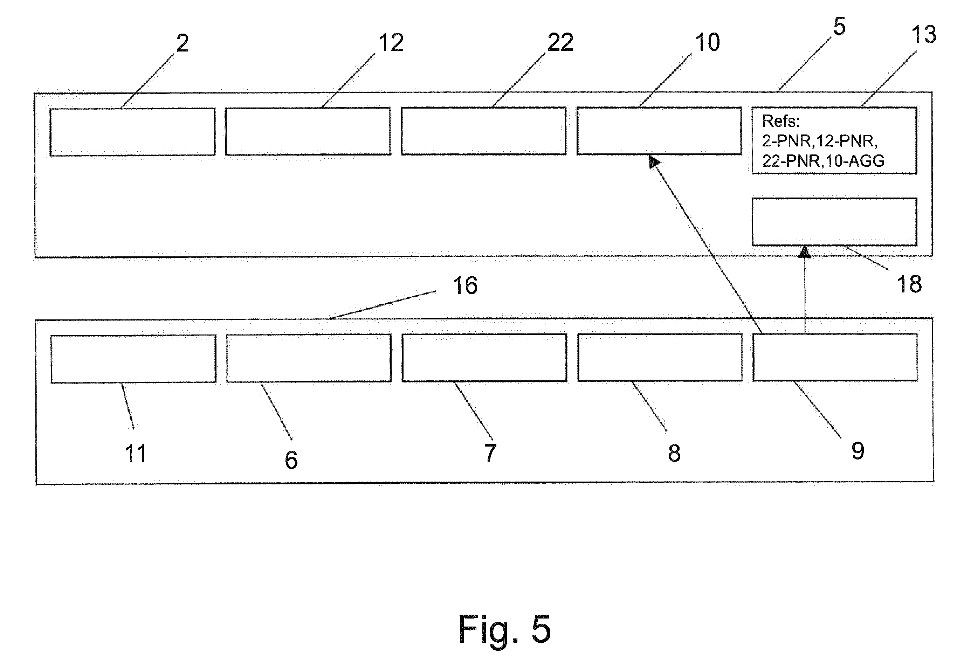

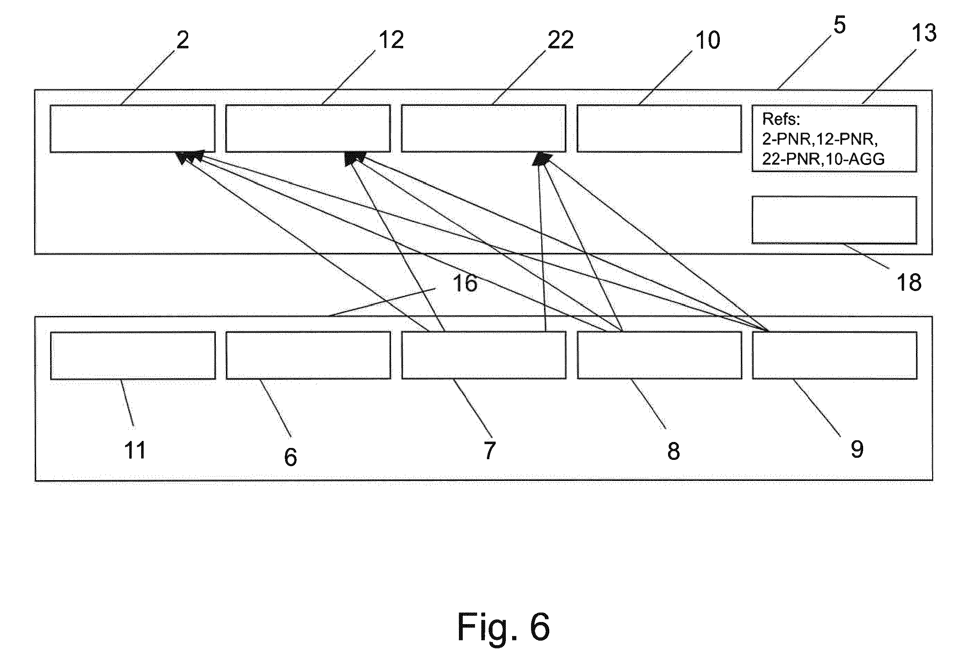

Figure 5 shows that the issuing component 9 issues the paid ancillary travel service by adding the issuing information to the aggregation record 10. The issuing component, preferably then, generates the single EMD 18 containing the issued ancillary travel service for the client. As can be seen in figure 5, the EMD 18 is linked to the mapping record 13, this is however not critical for the invention. Preferably, as shown in figure 6, after issuance of the paid ancillary travel service, respective pricing, payment and issuance information is added, for example by copying, to the respective PNRs 2, 12, 22 by the respective pricing component 7, payment component 8 and issuing component 9. Although it is possible to add respective pricing and payment information already earlier to the respective PNRs 2, 12, 22, it is deemed easier to only do it after issuance of the ancillary travel service to avoid having to delete the information from the different PNRs when no ancillary service is actually issued in the end.

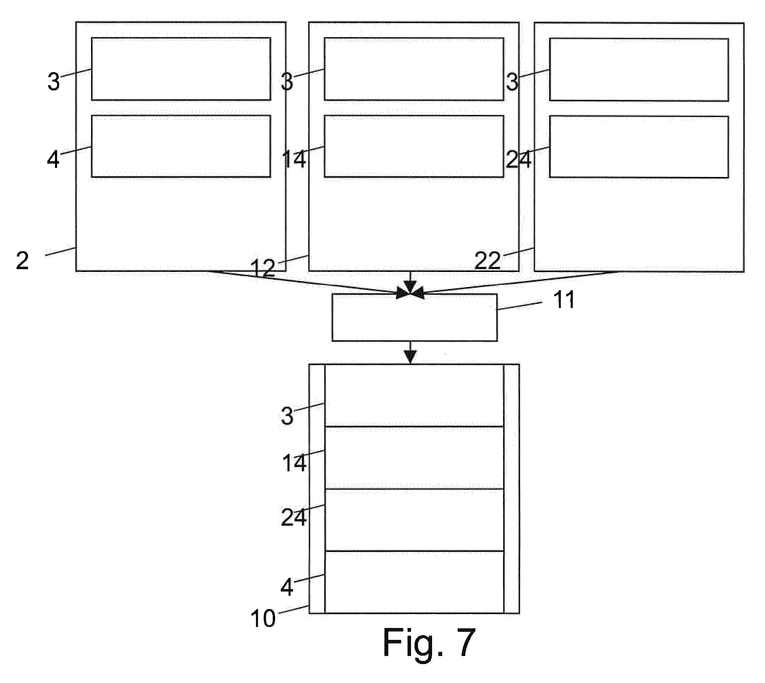

Figure 7 shows an overview of the aggregation of the different PNRs 2, 12, 22 into a single aggregation record 10. It can be seen that the different PNRs have the same passenger information (PAX) 3 but different segment information 4, 14, 24. For example, the different PNRs 2, 12, 22 relate to different legs of a travel itinerary for a same passenger. In such a case the aggregation component 11 aggregates the respective segment information 4 into the aggregation record 10 together with the passenger information. Preferably, although not shown in the figures, in addition, any other type of data used by any booking, pricing, payment or issuance process is merged and copied into the aggregation record 10.

Although the respective different passenger information relates to a same passenger, the passenger information may nevertheless be different. For example the contact data of the passenger could be different in the different PNRs. Preferably, the aggregation component 11 takes this into account by adding the different contact data to the aggregation record 10.

Figure 7 does not show that the different PNRs have more than one passenger information. However, it is possible that more than one passenger information is present in at least one of the PNRs 2, 12, 22. For example, it could be possible that one or more of the PNRs 2, 12, 22 could for example comprise passenger information relating to a second passenger for one of the legs of the travel itinerary. In such case the aggregation area also copies the second passenger information to the aggregation record 10 and couples the second passenger information to the corresponding segment information copied to the aggregation record 10.

In addition it is possible that some segment information 4, 14, 24 is present in one or more of the PNRs 2, 12, 22 as a so-called informational segment. The aggregation component 11 also takes such informational segments into account and copies them to aggregation record 10, preferably after having marked them as active segments.

## Claims

1. A computer system (1) for generating an Electronic Miscellaneous Document (EMD) (18) containing information relating to at least one ancillary travel service booked for at least one Passenger Name Record (PNR) (2, 12, 22) for a client, the PNR comprising passenger information (PAX) (3) and segment information (4), the system (1) comprising a controller (16) arranged for receiving a request (17) for obtaining an ancillary travel service coupled to a PNR, a computer storage logic (5) operatively coupled to the controller (16), the controller (16) being provided to retrieve the PNR from the computer storage logic (5), and comprising a booking component (6) for booking the ancillary travel service to the PNR (2, 12, 22) by adding booking information to the PNR (2, 12, 22), a pricing component (7) for pricing the booked ancillary travel service information and adding pricing information to the PNR (2, 12, 22), a payment component (8) for paying the priced ancillary travel service and adding payment information to the PNR (2, 12, 22) and an issuing component (9) for issuing the paid ancillary travel service by adding issuing information to the PNR (2, 12, 22) and generating an Electronic Miscellaneous Document (EMD) (18) containing the issued ancillary travel service for the client, **characterized in that** the request (17) is for obtaining at least one ancillary travel service coupled to the plurality of PNRs (2, 12, 22), **in that** the booking component (6) is provided to add the booking information to an aggregation record (10), **in that** the pricing component (7) is provided for putting pricing information to the aggregation record (10), **in that** the payment component (8) is provided for adding payment information to the aggregation record (10) and **in that** the issuing component (9) is provided to issue the at least one paid ancillary travel service by adding issuing information to the aggregation record (10) and generating a single EMD (18).

2. A system according to claim 1, wherein the controller comprises an aggregation component (11) for, upon receipt of the request (17) for obtaining at least one ancillary travel service coupled to the plurality of PNRs (2, 12, 22), creating the aggregation record (10) and aggregating the passenger information of a plurality of Passenger Name Records (PNRs) (2, 12, 22) into the aggregation record (10).

3. A system (1) according to claim 1 or 2, wherein the aggregation component (11) aggregating the passenger information of the PNRs into the aggregation record (10), is provided to scan the passenger information (3) and the segment information (4) and to identify the at least one passenger in the different PNRs (2, 12, 22) and to couple the at least one passenger to the corresponding plurality of segments found in the PNRs (2, 12, 22).

4. A system according to any one of the preceding claims, wherein the booking component (6) is provided to add the booking information to the aggregation record (10) by copying the booking information to the aggregation record (10) after booking the respective ancillary travel services to the respective PNRs (2, 12, 22) by adding the respective booking information to the respective PNRs (2, 12, 22).

5. A system (1) according to any one of the preceding claims, wherein the payment component (8) is provided to, when adding respective issuing information to the respective PNRs (2, 12, 22), add the respective payment information to the respective PNRs (2, 12, 22).

6. A system (1) according to any one of the preceding claims, wherein the computer storage logic (5) is provided to link the PNRs (2, 12, 22) and the aggregation record (10) by the computer storage logic (5) to a single mapping record (13).

7. A system (1) according to claim 6, wherein the computer storage logic (5) is provided to accord a session ID to the folder (13).

8. A system (1) according to any one of the preceding claims, wherein the controller (16) is provided to accord an aggregation record reference to aggregation record (10).

9. A system (1) according to any one of the preceding claims, wherein the system (1) further comprises an accounting component (15) for adding accounting information to an interface record (IR) after addition of the payment information to the PNRs (2, 12, 22).

10. A method for generating an Electronic Miscellaneous Document (EMD) (18) containing information relating to at least one ancillary travel service booked for at least one Passenger Name Record (PNR) (2, 12, 22) for a client, the PNR (2, 12, 22) comprising passenger information (PAX) (3) and segment information (4), the method comprising the steps of:
- a controller (16) of a computer system receiving a request (17) for obtaining an ancillary travel service coupled to a PNR (2, 12, 22),
- the controller (16) retrieving the PNR (2, 12, 22) from a computer storage logic (5) operatively coupled to the controller (16),
- a booking component (6) of the controller (16) booking the ancillary travel service to the PNR (2, 12, 22) by adding booking information to the PNR (2, 12, 22),
- a pricing component (7) of the controller (16) pricing the booked ancillary travel service information and adding pricing information to the PNR (2, 12, 22),
- a payment component (8) of the controller (16) paying the priced ancillary travel service and adding payment information to the PNR (2, 12, 22) and
- an issuing component (9) of the controller (10) issuing the paid ancillary travel service by adding issuing information to the PNR (2, 12, 22) and generating an Electronic Miscellaneous Document (EMD) (18) containing the issued ancillary travel service for the client,
**characterized in that** the request (17) is for obtaining at least one ancillary travel service coupled to the plurality of PNRs (2, 12, 22), **in that** the booking component (6) adds the booking information to an aggregation record (10), **in that** the pricing component (7) puts pricing information to the aggregation record (10), **in that** the payment component (8) adds payment information to the aggregation record (10) and **in that** the issuing component (9) issues the at least one paid ancillary travel service by adding issuing information to the aggregation record (10) and generating a single EMD (18).

11. A method according to claim 10, wherein the controller (16) comprises an aggregation component (11), upon receipt of the request (17) for obtaining at least one ancillary travel service coupled to the plurality of PNRs (2, 12, 22), creating the aggregation record (10) and aggregating the passenger information of a plurality of Passenger Name Records (PNRs) (2, 12, 22) into the aggregation record (10).

12. A method according to claim 10 or 11, wherein the method comprises the, preferably subsequent, steps of
- the controller (16) receiving the request (17) for obtaining at least one ancillary travel service coupled to a plurality of PNRs (2, 12, 22),
- the controller (16) retrieving the PNRs (2, 12, 22) from the computer storage logic (5),
- the booking component (6) adding the booking information to the aggregation record (10) and, preferably after, booking the respective ancillary travel service to the respective PNRs (2, 12, 22) by adding the respective booking information to the respective PNRs (2, 12, 22),
- the pricing component (7) pricing the booked ancillary travel service information and putting the pricing information to the aggregation record (10) and, preferably then, adding respective pricing information to the respective PNRs (2, 12, 22),
- the payment component (8) paying the priced ancillary travel service and adding the payment information to the aggregation record (10) and, preferably thereafter, adding respective payment information to the respective PNRs (2, 12, 22) and
- the issuing component (9) issuing the paid ancillary travel service by adding the issuing information to the aggregation record (10) and, preferably then, adding respective issuing information to the respective PNRs (2, 12, 22) and generating the single Electronic Miscellaneous Document (EMD) (18) containing the issued ancillary travel service for the client.

13. A method according to any one of claims 10 - 12, wherein the aggregation component (11) aggregating the passenger information of the PNRs (2, 12, 22) into the aggregation record (10), scans the passenger information (3) and the segment information (4) and identifies the at least one passenger in the different PNRs (2, 12, 22) and couples the at least one passenger to the corresponding plurality of segments found in the PNRs (2, 12, 22).

14. A method according to any one of claims 10 - 13, wherein the booking component (6) adds the booking information to the aggregation record (10) by copying the booking information to the aggregation record (10) after booking the respective ancillary travel services to the respective PNRs (2, 12, 22) by adding the respective booking information to the respective PNRs (2, 12, 22).

15. A method according to any one of the claims 10 - 14, wherein when adding respective issuing information to the respective PNRs (2, 12, 22), the payment component (8) adds the respective payment information to the respective PNRs (2, 12, 22).

16. A method according to any one of the claims 10 - 15, wherein the PNRs (2, 12, 22) and the aggregation record (10) are linked by the computer storage logic (5) to a single mapping record (13).

17. A method according to claim 16, wherein the folder (13) is accorded a session ID.

18. A method according to any one of claims 10 - 17, wherein the aggregation record (10) is accorded an aggregation record reference.

19. A method according to any one of claims 10 - 18, wherein an accounting component (15), preferably of the controller (16), adds accounting information to an interface record (IR) after addition of the payment information to the PNRs (2, 12, 22).

20. A method according to any one of claims 10 - 19, wherein the method is provided for generating an Electronic Miscellaneous Document (EMD) (18) with the computer system (1) according to any one of claims 1 - 9, the controller (16) being part of the computer system (1).
